# EUROPEAN PATENT APPLICATION

(11) **EP 1 912 164 A2**
(43) Date of publication of application: **16.04.2008**
(21) Application number: 07254074.3
(22) Date of filing: 15.10.2007
(51) Int. Cl.: G06N 5/02

(54) **Content enhancement system and method and applications thereof**

(30) Priority: 15.10.2006 IL 17857906; 15.10.2006 IL 17858006; 15.10.2006 IL 17858106; 15.10.2006 IL 17858206; 15.10.2006 IL 17858306
(71) Applicant: Unbounded Access Ltd., 91487 Jerusalem (IL)
(72) Inventor: Seeman, Lisa, Beit Shemesh 99050 (IL)
(74) Representative: White, Duncan Rohan

(57) **Abstract**

There is described a data reuse system comprising a knowledge capture unit, and a knowledge processing unit, wherein said knowledge capture unit comprises a knowledge encoding unit and a knowledge storing unit and said knowledge processing unit comprises said knowledge storing unit and a knowledge processing unit.

A method for disambiguation of content and localization of culturally sensitive content is described comprising, parsing content of an object for cultural objects and components, gathering knowledge about the object, inferring knowledge about the object, checking if the object is culturally appropriate, checking if the object and section of an object conform to local standards; and creating an adapted rendering of the object.

## Description

### FIELD OF THE INVENTION

The present invention relates to enhancing source content and uses of enhanced content.

### CROSS-REFERENCE TO RELATED APPLICATIONS

This application claims the benefit of Israel Patent Application. No. Israel Patent Application No. 178579, entitled "Secure User Identification for Interactions System & Method," Israel Patent Application No. 178580, entitled "Business Data Reuse System & Method," Israel Patent Application No. 178581 entitled "Enabling Technology for Disambiguation, Localization, and Culturally Sensitive Content," Israel Patent Application No. 178582 entitled "System & Method Adaptive Knowledge System & Method" Israel Patent Application No. 178583 "Knowledge Object Programming System & Method," all of which were filed on October 15, 2006.

### BACKGROUND OF THE INVENTION

Source content may be used in different contexts by people, devices, and applications with different backgrounds, needs, abilities and accessibility issues. Much research is being done to increase accessibility, reusability, and automatic manipulation of source content. Although there are numerous digital archives implemented for various domains, these archives as well as the World Wide Web do not currently form a basis for developing knowledge-based content. One difficulty is that contents and resources are created by separate individuals, groups, departments, or projects are dispersed and cannot be managed centrally, integrally, or reused by others. Digital content is often managed on the data or information level for preservation, but not on knowledge level for sharing and reuse. Secondary applications, that need to provide alternative access to complex user interfaces, are often left guessing at the semantics behind specific portions of a document making them unusable without significant human intervention.

**The current state of machine translation (MT).** There are 1 billion Internet users today, presenting an enormous cost burden for those companies hoping to provide information and market their products and services on a global basis. With over 2000 languages in use by internet users, Machine Translation is the only cost-viable option for many translation needs. There is also significant need for improved disambiguation technology in other markets, such as in business data processing and analysis. The value of the products and services offered in the business intelligence market is dependant on the accuracy and quality of the data collected upon which these services are based.

The following are approaches currently used for MT and to resolve ambiguity in natural language: Semantic rules based on content, Restricted and controlled languages, and Computer-Assisted Translation (CAT). Other approaches include Translation Memory (TM), Statistical Machine Translation (SMT), BMT (Statistics-based Machine Translation), and Hybrid Translation Methodologies.

### BRIEF DESCRIPTION OF THE DRAWINGS

The present invention will be understood and appreciated more fully from the following detailed description, taken in conjunction with the drawings in which:
Fig. 1 is a block diagram illustration of a system for enhancing content, operative in accordance with a preferred embodiment of the present invention;
Fig. 2 is a data flow diagram of exemplary usage of the content enhancement system of Fig. 1, operative in accordance with a preferred embodiment of the present invention;
Fig. 3 is a data flow diagram of an exemplary method for disambiguation using defaulting an example of knowledge mechanisms 33 of Fig. 2, operative in accordance with a preferred embodiment of the present invention and;
Fig. 4 is a block diagram illustration of an example of knowledge creation using the system for enhancing content of Fig. 1 with a sophisticated knowledge store, operative in accordance with a preferred embodiment of the present invention;
Fig. 5 is a block diagram illustration of an authoring tool, an example of user interface tool 10 (Fig. 1), operative in accordance with a preferred embodiment of the present invention;
Fig. 6 a is a block diagram illustration of an example of cultural and local adaptation, operative in accordance with a preferred embodiment of the present invention;
Fig. 7 is a graphical illustration of an exemplary simplified RDF representing the example
Fig. 8 a block diagram illustration of a secure user identification system, operative in accordance with the present invention; and;
Fig. 10 is a block diagram of an exemplary core software framework for KOP, operative in accordance with a preferred embodiment of the present invention.

It is noted that for simplicity and clarity of illustration, elements shown in the figures have not necessarily been drawn to scale. Further, where considered appropriate, reference numerals may be repeated among the figures to indicate corresponding or analogous elements.

### DETAILED DESCRIPTION OF THE INVENTION

### Mapping of concepts and terms

Knowledge store or knowledge base hereinbelow may comprise any of the resource specific knowledge base(s), resource knowledge base(s), scenario-specific style sheet rules, user preferences, mapping knowledge base, taxonomy, meta graphs, etc. described. Knowledge store hereinbelow may comprise any of content mapping rules, knowledge data, ontologies, concepts, associated concepts, associated content, implied content, assumptions, roles, relationships, predicates, knowledge about knowledge, associations, abstract concepts, implicit meanings, implied meanings, simplifications, dependent meanings, disambiguating information, context references, sections of meaning ambiguities, metaphors, similes, knowledge model(s), relationships to core concepts in human knowledge that enable content in different domains to be manipulated and adapted, limitations, intents, types of content, interpretations, clarifications, rules, links, statements, overrides, cascaded rules, definitions, equivalents, implied and secondary meanings, implied information, standardized abbreviations, replacements, identity information, functionality, hierarchical information, structural information, relative importance of elements, language usage associations, rules, descriptions, expected behaviors, expected usages and audiences, relationships to other resources or elements, knowledge, conditions, alternatives, grammatical information, lexical knowledge, syntactical supplementary information, linguistic information, media equivalencies, knowledge of language use, knowledge concerning form, knowledge concerning content, knowledge concerning presentation, knowledge concerning syntactical information, language usage and uncertainties that arise from language usage, ambiguity, phraseology, supplementary information concerning form, supplementary information concerning content, supplementary information concerning presentation, supplementary information concerning syntactical information, information concerning hierarchical prominence of an element, functional alternatives to an element, relative importance of an element, relative importance based on or mapped to a user profile, knowledge mapped to or relative to a user profile, knowledge mapped to or relative to a system profile, knowledge mapped to a scenario profile, equivalent and alternate events and behaviors, a default, defaults selected from the list of common standard interpretations, lexicons, overrides and other exceptions that map text to meanings in accordance with considerations such as defined location, conditions and user profiles, meanings for ambiguous textual elements, functional meanings of an element's label, end scenario information, priority information, override information, structural information, presentational information, mapping information, relationship information, importance information, certainty information, context information, scope information, usage information, third party information, formatting information, information on context of a section of content, a user preferences file, a scenario specific transformation, an inheritance relationship, graphs of the above, relationships between different terms, and maps of relationships between related pieces of knowledge.

In the description hereinbelow the expression "knowledge" comprises any of the contents of a knowledge store.

Knowledge capture and processing engine hereinbelow may comprise any of a resource accessibility engine annotation wizard(s), an editor interface, a lexical analyzer, an interactivity analyzer, a complexity analyzer, an extractor, transformation program(s), a knowledge gap situations compiler, a content parser, a content analyzer, RDF analysis engine, inference engine, and rendering engine described.

Enriched content hereinbelow may comprise mapped resource(s) and converted resource(s).

Source content hereinbelow may comprise resource(s) and their content.

The current invention adds and/or uses a layer of knowledge to and/or of content that may allow the content to be easily adapted to different and/or new scenarios. The methodology of the current invention may comprise, for example, classifying content types, use of knowledge embedded in a web site by a resource, and other methods described hereinbelow to enable the adaptation of content. Non-limiting examples of adaptations that may be required are access for disabled users, disambiguation of content, culturally appropriate adaptation of content, translation of content, localization of content, and reuse of business and/or other data. These examples and others will be described in detail hereinbelow.

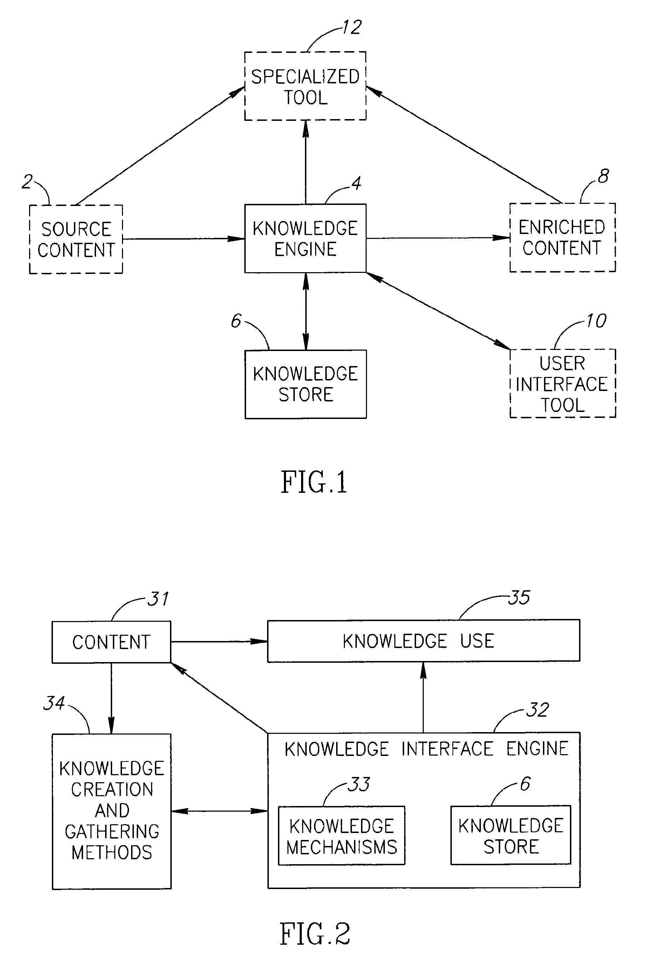

Reference is now made to Fig. 1, which is a block diagram illustration of a system for enhancing content, operative in accordance with a preferred embodiment of the present invention. The content enhancement system may comprise a knowledge capture and/or processing engine (hereinbelow knowledge engine) 4 and a knowledge store 6 (also known as a knowledge base) operatively connected.. Knowledge engine 4 may optionally receive source content 2 as input, and may optionally send output to enriched content 8. Enriched content 8 may comprise content, changed content, and/or information about content. Optional specialized tool 12 may receive input from any of source content 2, knowledge engine 4, and enriched content 8. Knowledge engine 4 may comprise at least one engine for knowledge capture and/or processing. Knowledge engine 4 may function as a clarity addition unit. Knowledge engine 4 may optionally communicate with user interface tool 10. Knowledge store 6 may comprise at least one database comprising knowledge. Knowledge store 6 may be comprised in source content 2, a part of content accessible by the system of the present invention, comprised in a database, and/or distributed across multiple appropriate locations.

Content in general and source content 2 in particular may comprise, for example, websites, web content, multimedia files, word processing files using different formats, databases of different formats, resource files, data objects, text, programming objects, complicated documents, and books intended for electronic viewing. Source content may be comprised of at least one element (such as a widget, word, phrase, text section, table cell, data field, heading, multimedia, etc.) of source content.

Enhancement of source content may optionally comprise creation of enriched content 8 that may comprise additional knowledge about content.

Knowledge engine 4 may comprise at least one knowledge capture program and/or at least one knowledge processing program. A knowledge capture program may be used to examine content to find information/knowledge embedded therein (herein knowledge capture phase). A knowledge processing program may be used in conjunction with at least one knowledge store 6 to "capture" and "learn" additional meaning/information/knowledge about or implicit in content and/or knowledge comprised in a knowledge store 6 (herein knowledge processing phase). The information/knowledge may be saved in any of knowledge engine 4, knowledge store 6, content, and/or any other appropriate place. Knowledge store 6 may comprise content specific and/or general knowledge bases, taxonomies, rules etc. Knowledge store 6 may comprise knowledge as defined hereinabove.

Use of knowledge engine 4 in conjunction with knowledge store 6 may, in a non-limiting example, enable the identification of element(s) from content such as source data files and may suggest a role for an element(s) and/or create inferences about an element(s). For example, a short sentence in enlarged font at the top of a page is probably a header.

Optionally, user interface tool 10 may be used to obtain further clarification regarding content from a user and/or editor. User interface tool 10 may be used confirm additional meaning/information/knowledge generated generally automatically by knowledge engine 4.

Optionally, specialized tool 12 with input from any of source content 2, knowledge engine 4, and enriched content 8 may enable further specialized processing. Specialized tool 12 may comprise an intelligent application, a knowledge use tool, may create alternative interfaces and/or formats and may allow automatic reuse of knowledge from one application to another.

A preferred embodiment of the present invention may allow the creation of re-purposed content. When presented to a user, re-purposed content may convey essentially the same function or purpose as the original content, but may comprise clarity enhancements. The re-purposed content may be adapted to new scenarios, environments, and/or in a manner appropriate to the user, device, and/or application to/on which the content is intended to be rendered and/or run. In a non-limiting example of taking into account user disabilities, auditory or visual content may need to be presented in a manner accessible to a deaf or blind user.

Non-limiting examples of re-purposed content may comprise text replaced with symbols and simple words, less important parts of the content removed or hidden, ambiguous wording such as syntactically ambiguous phrases and confusing word ambiguities replaced with clear expressions, and extra help or text provided when it aids comprehension. For example, if a new method of displaying complex content to blind persons becomes available, the new method may be applied to pre-existing source content, by incorporating the new methods into the appropriate knowledge store 6, or even by just having a new specialized tool using existing knowledge on old source content.

An embodiment of the present invention may be used for adapting content, for example, to allow localization and/or personalization, to create culturally sensitive content, to perform and/or improve automated language translation, to allow for programming objects to be interoperable or work together, allow for business and general data reuse, secure user identification, all of which will be described in greater detail hereinbelow. The present invention may also be used to aid human processes such as by human translators or content users who may avoid errors by using content enriched with extra clarifying information. An embodiment of the present invention may further be used with an "adaptive knowledge system" (AKS) and/or with "knowledge object programming" (KOP), which will be described in greater detail hereinbelow.

Reference is now made to Fig. 2, a data flow diagram of exemplary usage of the content enhancement system of Fig. 1, operative in accordance with a preferred embodiment of the present invention. Content 31 may be input to knowledge creation and gathering methods (herein knowledge methods) 34 or may be input to knowledge use 35. Knowledge methods 34 may communicate with a knowledge interface engine 32. Knowledge interface engine 32 may provide input to content 31 and knowledge use 35. Content 31 may comprise source content 2 (Fig. 1), enriched content 8 (Fig. 1) or any appropriate form of electronic content as described hereinabove. Content 31 may be ambiguous, vague, unstructured, hard to understand and/or hard to process. Alternatively, content 31 may be rich in information that may easily be harvested as will be explained. Knowledge interface engine 32 may comprise knowledge store 6 and knowledge mechanisms 33. Knowledge interface engine 32 may provide access to knowledge store 6 via a knowledge storage API. Knowledge interface engine 32 may for example comprise queries, inferences, reaching conclusions, reading and writing. Knowledge store 6 may comprise knowledge about content 31 as described herinabove. Non-limiting examples of knowledge 6 comprise content specific knowledge, background concepts, predicates, ontologies, knowledge about mechanisms, certainty, knowledge linking certainty to scenarios. Knowledge mechanisms 33 may comprise primary algorithmic mechanisms, protocols, and methods, as a non-limiting example, content specific knowledge, lexicons, taxonomies, knowledge bridge frameworks, knowledge stored though a system of defaults, resolvers, overrides, linking, scope and context protocols, etc. Knowledge specific to content 31 may be linked to general background or group specific knowledge. Knowledge methods 34 may comprise methods for gathering and building knowledge from and/or about content 31. Exemplary non-limiting methods may comprise analyzing content, gleaning information from content, identifying implicit information based on structure, function, or presention, guessing implicit information, analyzing the reliability of guesses, identifying gaps in knowledge, and optionally the use of human input. The methods may further enable the use of previously found knowledge gap resolutions and/or human input to fill in the gaps of knowledge and may thus create better implied knowledge about content 31. Knowledge methods 34 may identify, compensate for and/or remove the defects that can produce errors when content 31 is used. Knowledge methods 34 may comprise methods that may be used by a knowledge engine such as that described hereinabove.

One cause of knowledge gaps may be the occurrence of ambiguities that may result in misunderstandings or confusions. For example, when a sentence contains more than one pluralized term the meaning may become unclear: "the girls got on the busses". In another example a word may confuse and cause mistranslations when it has more than one meaning that fits with the grammar make-up and context of the sentence. In such cases, solving the word ambiguities may also resolve the syntactic ambiguity. In a sample sentence, "Fasten the assembly with the lever", an annotation on the word "with" that defines its meaning as "using" as opposed to "having" may resolve the syntactic ambiguity. Identifying these high probability uncertainties and asking a human for more information may hugely reduce the effect of ambiguities in content 31 on automated or non-automated processes.

Knowledge in knowledge interface engine 32 may be increased by knowledge methods 34. Knowledge interface engine 32 may be used to enable use of knowledge methods 34, for example, by providing rules, certainty information, definitions, alternatives, etc. Knowledge in knowledge store 6 and knowledge mechanisms 33 may be very interdependent. The information gathering and storage process may become cyclic as information gathered from content 31 may be used to produce new rules, data, and mechanisms that then enable more knowledge to be gathered. This cyclic process may result in more enriched content, clearer content, better information and data gathering, creation of new codes, fewer errors in machine processes such as ETL systems and translation, creation of new or adaptable interfaces for different user scenarios, etc.

To understand the current invention it may be important to understand the difference between knowledge and data. Data comprises a variable name that is set to a value whereas knowledge follows the more human form of a simple sentence with a subject-predicate-object structure.
- An example of data is:: $ step1= 10
- Examples of knowledge are:: table IsTypeOf furniture
ConferenceTable IsLarge table
where IsTypeOf and IsLarge are part of a defined taxonomy (list of terms) of properties or predicates. For example, a taxonomy that supports the object may support key concepts in categorization and relationships.

### Exemplary knowledge comprised in Knowledge Store 6

Various key types of knowledge comprised in knowledge store 6 are described. Non-limiting examples of aspects of content that may be mapped to taxonomies to create knowledge in knowledge store 6 may comprise:
- **Concepts:** Essential concepts in words, images, sounds, touch
- **Metaphors:** Associations in words, images, sounds, touch
- **Content:** Text, pictures, multi media
- **Standards:** Legal requirements, measurements , units
- **Tasks:** Organization of data, functions, tasks, roles
- **Navigation:** Movement through tasks, relationships, groupings
- **Interaction:** Input/output techniques, feedback
- **Appearance:** Visual, colors, verbal (including pronunciations), tactile
- **Context:** Cultural assumptions, user assumptions, relationships to other content, etc.

### Taxonomies

The invention may use taxonomies or lists of terms. Taxonomies may comprise terms for the different indexes for localization and/or specific markets. Taxonomies may comprise key terms to represent concepts such as values, expectations, measurements, relationships, logic, types of data, abbreviations, legal terms, requirements (such as names of local taxes), business terms, categories, common vendors, etc. The present invention may use general taxonomies, as well as industry-specific taxonomies to build a knowledge base. These taxonomies may be extended at any time including during the "knowledge capture" phase.

Non limiting examples of taxonomies comprise:
- Rules for cascading and overrides for removing ambiguities
- Key classification concepts
- Concepts used in a given field of activity
- Dictionaries
- Predicates, and relationships
- Roles, Functions
- States
- Events and activities
- Types of content
- Rules and terms for rules
- Pivot terms (core concept that are mapped to by local and other taxonomies)
- Taxonomies for node mapping across data formats
- Standards
- Types of classifications and lexicons
- Types of disambiguation (such as localization, pronunciation, meanings, simplifications)
- Terms relating to culture and location (includes culture-centric pivot taxonomies)
- Value and term mapping to cultural indexes
- Properties
- Terms for conversion APIs
- User and application strategies, needs, and profiles

A knowledge store may comprise knowledge about the terms in a taxonomy, and these pieces of knowledge may themselves have relationships to other terms. For example, there may be knowledge that rates the importance or lack thereof, of the terms in a given taxonomy in relationship to other terms. These rankings may have dependencies that relate to other terms. For example, a ranking may be for a given culture and the ranking may be further rated in comparison with different cultures and sub cultures. A given taxonomy may be linked to other taxonomies which may comprise knowledge that may be used in conjunction with the taxonomy. For example, a jurisdiction taxonomy may be linked to a taxonomy of measurements, standards, and other localization issues. Further knowledge for the knowledge base may be obtained from a content provider who may have or may collect knowledge about their content such as types of content or pictures. For example, some pictures may be known to be logos and some key words for searches may be associated with product entries.

The knowledge store of the current invention may comprise maps of the relationships between the site content and the background information such as cultural terms. This information may then be used to adapt content to new markets, warn web authors about the suitability of content, be fed into a different application, and/or other appropriate use.

Non-limiting examples of knowledge in the knowledge store are given. Knowledge may comprise the meaning(s) and role(s) of terms. Knowledge may relate to standards such as those concerning the usage of color, icons, and/or user interfaces. Knowledge may relate to bilingual requirements such as those of Canada. Knowledge may relate to usage/definition of objects such as currency, time, and physical measurements. Such knowledge may allow use of conversion algorithms to map between terms in the taxonomies. Knowledge may include knowledge about other pieces of knowledge. Knowledge may include information that may identify potential gaps in knowledge, in either the knowledge store or in the content. Knowledge may not have to be certain. Knowledge about the certainty knowledge and conditions for certainty levels may be comprised in a further preferred embodiment.

### Knowledge Mechanisms 33

### Resolvers

Herein, a resolver is a generalized term for a statement that links content to an interpretation of that content. A resolver may link to a concept reference that may associate a content chunk with a concept. That concept may itself be associated with different words, phrases, symbols, and/or other content in different languages or cultures. These mappings may then be used together to translate or adapt a content to any form which is mapped to the same concepts.

A document may link to a sequence of resolvers. Examples of resolvers may include a lexicon, an API to a natural language disambiguation algorithm and/or other mechanism for suggestion of a resolution of a term. Resolvers may come with associated priorities or priorities may be deduced by the cascading order or some other set of rules. The highest priority resolver may be used first. Resolvers may generate a list (prioritized) of alternatives to disambiguate a word/phrase, they may return a single option, or they may have no suggestions at all. Overrides are a form of resolver that override the default suggestions for a word or phrase within a given scope.

### Defaults

One or many profiles for rules of defaults may be built and linked to by a document. Alternatively, they may be hard coded into a system. The defaults may dictate what resolver to use when, and what the current best guess of the system is. Example rules for defaulting for resolvers comprise:
i If a word is part of a known phrase found by a resolver (such as a lexicon) that has been configured for use (and the rest of the words in the phrase also appear in the document following that word), then the meaning of the phrase may be the highest priority (such as the first) meaning found in the lexicon for that phrase.
ii If a word is part of a known phrase found in a lower priority lexicon then the meaning of the phrase may be the highest priority (such as the first) meaning found in the highest priority lexicon.
iii If a word is found in a resolver (such as a lexicon) that has been configured for use, then the meaning of the word may be the highest priority (such as the first) meaning found in the resolver.
iv If a word is found in a lower priority resolver (such as a lexicon) that has been configured for use, then the meaning of the word may be the highest priority (such as the first) meaning found in the highest priority resolver.

Hence, a document may be associated with a cascaded list of lexicons with definitions. The highest priority lexicon may be a document with overrides that the user created whilst doing a similar document. The second document may be one of company jargon, the third may be a localization dictionary, and finally the lowest priority may be a large common dictionary. The default disambiguation may be the term as defined in the highest priority entry, in the highest lexicon, dictionary, or override where the term is found.

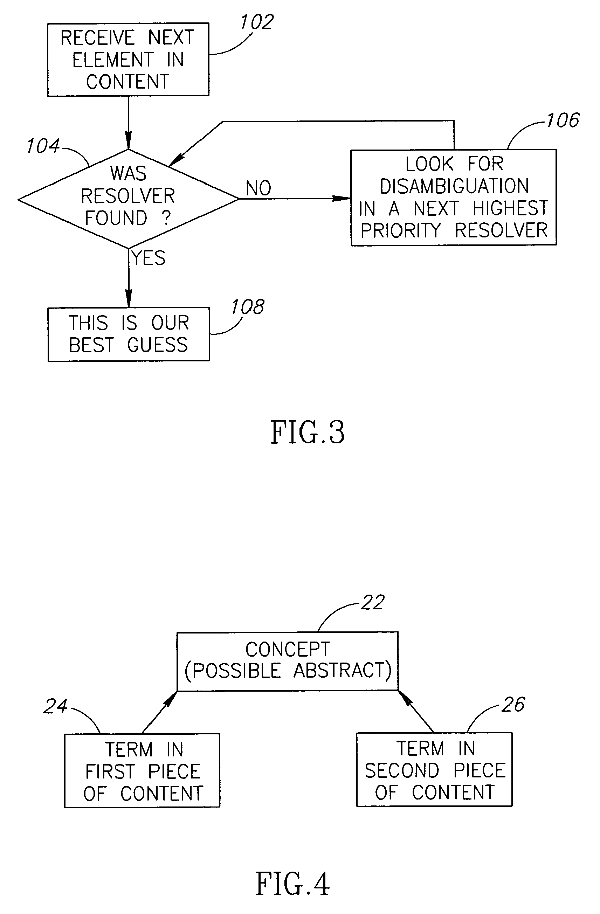

Reference is now briefly made to Fig. 3, a data flow diagram of an exemplary method for disambiguation using defaulting an example of knowledge mechanisms 33 of Fig. 2, operative in accordance with a preferred embodiment of the present invention. Content maybe parsed during execution of a method to disambiguate each element in content. A knowledge engine may receive the next element of content (102). A word may be searched for in the highest priority resolver that has been configured for use (104). If found then the meaning of the word may be the highest priority (first) meaning found in the resolver (108). If the word is not found then the word may be searched for in the next priority resolver (106). This may repeat until either the meaning is found or all resolvers are used and no meaning has been found. If no meaning is found then the word may be unknown. If a word is found in a lower priority resolver (lexicon) that has been configured for use, then the meaning of the word may be the highest priority (first) meaning found in the highest priority resolver. If a word has a higher priority meaning than when it appears in a phrase, the highest priority may win, but phrases are generally preferred if the priority is the same. The confidence level of the best guess may be important information that may be stored or derived at a later point. The confidence level (certainty) of a guess may be dependent on many factors such as, statistical analysis and information, proximity to similar related terms, the delta between the best and second best guess, etc. For example, a less certain guess may be presented to the user for clarification via user interface tool 10 (Fig. 1) or other method. In such a tool the thresholds for levels of certainty that determine if and how a guess is presented for display to the user may be adjusted. For example, very low certainty guesses and unknown words may be in red, whereas somewhat low certainty guesses may be presented in pink.

A further preferred embodiment of the present invention may allow the creation of overrides to resolvers. A user may select a word or phrase and may associate it with a lexicon or an entry to a lexicon, rule, or other appropriate choice. These may be stored in the document, in the document header, in the knowledge engine, in the knowledge store, and/or other appropriate place. The user may also provide a scope for the override in which the override is valid. For example, an override may be valid for a given sentence, paragraph, document, website, or directory, or may be restricted to a single occurrence of the word. Alternatively an rule such as a grammar or parsing rule may control the scope of an override.

In a typical implementation, an override may have higher priority than a resolver. Therefore, if an override exists then the word disambiguation may be the override. (An override based implementation may not even contain any resolvers.) If there is more than one override then the override with a smaller scope may have priority over an override with a larger scope (assuming that the word is within the scope of both overrides.) An implementation may adopt the first occurrence of identically typed and scoped overrides.

In a further preferred embodiment of the present invention, different users may create new lexicons, statements, priorities and defaulting rules, overrides etc. The cascading may also support rules and interpretation and use of knowledge about resolvers. For example, resolvers may become more important as their certainty increases. Certainty may be affected by knowledge about context or may be mapped to specific situations and/or scenarios. For example, if the context of a document is similar to the context of an existing enriched document, then knowledge formed about the resolvers of the enriched document may become relevant to the new document. In another example, identification of who made the suggested override may allow a given user to adjust the prioritization based on the given user's perceived trust of the user who suggested the override. For example, students using a document could annotate and create comments or text alternatives such as overrides about the text or set of diagrams. These comments may be used to provide help, such as simplification, to other users. The more credit an author of resolvers has the more certainty there may be of other resolvers by the same author. Knowing who made what annotation may help a given user decide whether they wish to see or rely on the annotations.

The clarification of a guess by a human or automated process may affect the certainty level associated with other guesses. For example, when a guess from a low priority resolver or source is clarified or conformed then other guesses from that resolver may increase in certainty. Rules may be run against source content that may reduce certainty levels irrespective of the resolver certainty. For example, any word in a list of multiple consecutive nouns may be likely to have been misunderstood. Hence, the certainty of each guess in a stack of nouns may be reduced. Rules and resolver certainty may also be changed due to context and the process and knowledge uses anticipated. For example the errors and uncertainties found in text for machine translation may relate to grammar and parsing issues may be different types and relate to different issues then then problems or uncertainties found in a document being prepared for students were simple text is advantageous. Further, a resolver or type of resolver may be more likely to be correct in one context if it was correct previously in a similar context than if it was correct in a different context, effecting the certainty associated with a type of resolver for a given context . For that reason, resolvers and priorities from similar documents may be automatically loaded.

In a further preferred embodiment of the present invention, different (and possibly multiple) types may be associated with resolvers, overrides, and/or other knowledge statements. For example, a simple language resolver may have a given age range or user profile associated with it. Additionally, simplification may be available in different languages.

A form of disambiguation may be pronunciation. For example, text may be associated with different text to speech defaults as resolvers, with cascaded lexicons of types of pronunciation. Overrides and resolvers may be associated with a type, such as which language, region, accent, or use-case the pronunciation override, lexicon, or resolver is associated with.

Different profiles, use-cases, and reliability criteria may be added to allow for more applications or types of enriched content. For example, multiple modes of disambiguation (different pronunciations, simple language, simple language in different languages, sign language, symbolics, adding a picture, etc.) or the use of cascaded lexicons to increase speed and personalized learning may be added.

In solving the word ambiguities, syntactic ambiguity may also be resolved. For example in the sentence, "Fasten the assembly with the lever", an annotation on the word with that defines it as meaning "using" would resolve the syntactic ambiguity.

Knowledge may also include how semi-structured or unstructured text may be parsed. For example the sentence "add an egg and oil or water" may be parsed as "add (an egg and oil) or water" or "add an egg and (oil or water)". Part of knowledge may include clarification of relationships, scope and context, such as the intended or implied meaning of pronouns and conjunctions.

To maximize the speed and degree of automation that content may be disambiguated in, this process may include a methodology whereby the automation of the knowledge life cycle may be increased and human intervention minimized, without compromising the reliability of knowledge. This may involve cascading different methodologies, and allowing for the combination of methodologies, such as different resolvers and types.

For example, if user specific dictionaries are found to be effective for disambiguation, then a resolver may guess the meaning of each word based on the user specific dictionaries. If a machine translation (MT) system (based on expert or artificial intelligence systems) that parses parts of speech is found to work better than the user specific dictionaries, then a second resolver maybe built using the MT parsing method and the second resolver may be given a higher priority than the first resolver. If a statistical method that guesses the meaning of words based on proximity to other terms or words is developed then a third resolver may be built based on the statistical system. Any existing resolver may be cascaded with other resolvers and the cascading order may be changed when/as appropriate.

The prioritization of these resolvers may change with context. For example, in a very clear context, such as technical documentation for a given company, user specific dictionaries may be the resolver most likely to work correctly. However, for unknown content, rule based resolvers may be the most effective. After being trained on large amounts of related material, statistical methods tend to work well. Therefore, the cascading and prioritization and use of resolvers may be dependent on rules or knowledge related to scenario and/or context. Clearly context and scenario also affect the certainty of any one guess.

The actual set of rules for defaults may be less important than the flexibility of the default system and/or its capability to support evolution of new or better language rules and disambiguation techniques.

Knowledge may be captured incrementally. Knowledge may initially be captured by a system when a document is created. For example, knowledge about a document may comprise who the author is which company created it, and so on. Such knowledge may useful context that may be saved in the knowledge store and may further be used to adapt guessing, resolvers, prioritization, certainty, etc. during subsequent iterations of knowledge gathering.

Tracking the life cycle of data and the flow of knowledge whenever information is extracted may be useful because knowledge and data may be lost during the life cycle, for example, knowledge known at authoring time may be lost when a file is saved. Knowledge may be captured incrementally as each layer of a picture is saved and/or as components and shapes are added to the image; this knowledge may be used later to build detailed information about the image. When similar reusable components of content or templates for content creation are associated with knowledge, that knowledge may be carried with derivative works. For example, the structure of a curriculum vitae (CV) template, and the meaning and intent of each section may be known, and if the information that a given document is based on a template for a CV is stored, then subsequent knowledge gathering may be adapted based on the knowledge that the document is a CV and the knowledge associated with the template may be associated with any derivative work. The same knowledge survival process may be true for knowledge gleaned via any knowledge method; for reusable code or for reusable objects in diagrams the meaning and role of lines vertices, colors, and nodes in an object library may survive for all derivative works.

An automated knowledge capture process may comprise the capture of ephemeral knowledge during interactions transparently creating a rich knowledge reservoir. Ephemeral knowledge comprises knowledge that evaporates upon completion of an interaction.

Another change of the resolver system for guessing meaning may be how knowledge will be used. For example, if the knowledge created will be used by a system that is based on statistics, then identifying uncertainties based on the failure of statistical methods, and gathering knowledge and making guesses based on the competencies of statistical methods may be advantages.

An embodiment of the present invention may comprise a resource description framework (RDF) type of annotation that may identify the usage of a word, word and language usages, and language context rules. Implied meaning in text may also include relative importance of the section. When processing text, for example by interfaces for learning disabilities, relative importance may be important information.

Annotations, and modelings such as RDF, may allow an author to make statements about the content, sections of the content or even specific objects. These capabilities may be used to create vocabularies for different uses (such as accessibility), providing alternatives for the content and form of documents. For example, in the case of accessibility, sections of text may be annotated as 'important' to a particular user profile. User agents may then know which text it is relevant to convert for an individual user. Complete accessibility support may be added through separate resource documents and accompanying metadata.

Knowledge may also be inserted or gathered into or from the document itself. For example, in the main body of a document, sections of text may be marked up to override the metadata lexicon. Mark up may be, for example, in an XML Language.
1. Sections of text may be marked up to include more than one meaning.
2. Sections of text may be marked up to include a secondary or third meaning (possibly using the main lexicon).
3. Sections of text may be marked up with types of content such as roles, context or language type (such as implied content, sarcasm, and other forms of non-literal alternatives.)
4. Redundant text may be identified though markup.
5. A summary may be provided though mark up.
6. Default meaning and word usage may be the primary usage defined in the highest priority meaning found in the highest priority lexicon.

Reference is now made to Fig. 4, a block diagram illustration of an example of knowledge creation using the system for enhancing content of Fig. 1 with a sophisticated knowledge store, operative in accordance with a preferred embodiment of the present invention. A term 24 (in a first piece of content and/or a knowledge store) and an element 26 (in a knowledge store and/or a second piece of content) may be used to arrive at a concept 22 which may be an abstract concept. This depicts the addition of knowledge in the form of concept 22 that may have been obtained by a knowledge engine.

A core list of terms may enable an abstract specification to capture and standardize the core concepts in human knowledge and hence may enable content in different domains to be manipulated, adapted, shared and used with other core lists. The core list of terms/elements may enable mapping from different core lists back to the original core list for the purpose of seeing the relationship of mapped core lists to each other and to the core list. Conversely abstract and pivot terms may be generated as new concepts and terms are created or analyzed. It is further noted that pivot terms may be nodes or placeholders and may not be actual terms.

Terms/elements may comprise general knowledge and/or specialist knowledge of at least one domain. Non-limiting examples include knowledge about a specific business domain or knowledge about the specific culture that the content is mapped to. The knowledge comprised in the terms/elements may then be used to enable fast and correct adaptation of content to a new domain or new culture, or the knowledge may warn or teach about the cultural appropriateness of content and/or other adaptive and/or intelligent use. This may allow the flexibility that may be needed to integrate new add-on functionality and/or adapt to new applications and environments.

To enable multi purpose reusable knowledge, in a further enablement of the present invention, pivot taxonomies may used to enable mapping domain specific terms to core classification taxonomies. In an example embodiment of the use of pivot taxonomies, core classification taxonomies are made truly universal by capturing, modeling, and standardizing these abstract concepts. The taxonomies may create a unifying bridge framework of knowledge modeling in different domains of content. This may be used to enable finding equivalents. This may include an ability to add content later and/or to generally automatically build equivalents to old content.

A supporting method in for cultural and local adaptation in a preferred enablement of the present invention may comprise:
**Step one:** Parse page content for cultural objects and components. This may be done for example by a wizard that looks for each element in a web page.
**Step two:** Gather knowledge or infer knowledge about the object. This may be done by a wizard for adding, encoding, and storing knowledge and meaning about content and animation sequences
   The engine (in step 3 below) and the wizards may use the same core API set. Functions that may be included within the API are:
   API of function calls that may allow the creation of knowledge statements.
   API of function calls that may allow for querying knowledge bases.
   Tool box that may enable loading and mapping of libraries of equivalents (extendable).
   The API layer may be dependent on an RDF parser and query languages such as Jena by HP and use a query language such as sparkle. Example queries may include "For a given term is this property supported? (true /false)". Format-specific wizards may be developed to take advantage of the knowledge inherent in the unique nature of each format. For example, inferences may be made regarding items grouped together in a single cell of an Excel worksheet, or of elements placed within a resume template in Word.
**Step three:** Check if the object is culturally inappropriate. An example algorithm to judge a core control as culturally inappropriate is true if [One association of the key word is offence in the culture or has a very low approval rating] OR [the average association of keywords is low - below a second threshold] If yes, may TAKE ACTION.
   This may require taxonomies and a processing engine for processing knowledge requests about culture, meanings of content, cultural appropriateness and available equivalents.
**Step four:** Does object and section of object conform to local standards? (This may involve parsing the object and running required testing tools) If not, may TAKE ACTION.
**Actions:** Actions may depend on case of the type of object. For example in the case of a dollar price, the price may be converted into the local currency by a simple conversion function. For the case of an inappropriate toy on the first page of a site, action may involve replacing the current toy with a toy with a different entry from their database, that is also very popular but that scores well for cultural appropriateness or sells well in this culture.

A preferred embodiment of the present invention may comprise a tool to enable a user to add information to a core document so that from a machine or human perspective the role of each phrase is known will be described. In a further preferred embodiment of the present invention an API may be built that may allow easy access by human or machine translators to check the meaning and context of each word in the document. Given a series of content for concepts such as yes/no, important, warning, etc., the content may be mapped to the concept that it represents and to the culture it originates from. Then the knowledge engine may be used to match the content with the correct representation of it.

### Generic Workflow

An exemplary application for disambiguating invoices may be described.

### Prepare the document for the first time disambiguation.

A user may select a document, may choose which resolvers (individually or from pre-configured sets, e.g. a set of lexicons, dictionaries and rules) to use, may choose the defaulting rules, and may pass a document to a disambiguation API.
The document may link to a sequence of resolvers (such as a lexicon, or an API to a natural language disambiguation algorithm, an API to Translation memory or other mechanism for suggestion of a resolution of a term). Resolvers may come with associated priorities or priorities may be deduced by the cascading order or some other appropriate set of rules. The highest priority resolver may be used first. Resolvers may generate a list (prioritized) of alternatives to disambiguate a word/phrase, they may return a single option, or they may have no suggestions at all. Overrides may be a form of resolver that override the default suggestions for a word or phrase within a given scope.

A background knowledge store may comprise a set of dictionaries that provide simple definitions and may map to concept nodes that in turn may be mapped to multiple ways of expressing a term in multiple languages. The knowledge store may comprise a glossary of typical terms and phrases that may be used in the contexts of the document, each term or phrase may be mapped to a concept from the taxonomy (as the same concept may be expressed in different ways and the same phrase - like "phone number" - may relate to different concepts, it is a many-to-many mapping).

An exemplary mapping coded in RDF/XMLmay comprise:

```
 <dictionaryxmlns:base="http://disambiguation.ubaccess.com/conceptmap/invoicing"
 version="1.0" xml:lang="en-US ">
  <definition>
   <text>billing address</text>
   <text>payment address</text>
   <text>credit card address</text>
   <concept>invoice:BillingAddress</concept>
  </definition>
```

A dictionary of translatables may maps each of the invoicing concepts to a clear definition. A definition may be considered clear and easy to translate if it survives a round-trip translation (when result of translating to a different language is used as input for backwards translation) without any changes in its meaning.

### Scopes and Priorities

The pre-configured priorities may have been set having in mind rules for defaulting as described hereinabove.

In the example of a source document that is an invoice, by default, in the scope of invoice data section, invoicing concepts may have a higher priority, and lexical disambiguations may either not be applicable, or applicable only in certain scopes (e.g. in purchase description, but not address data).

For the rest of the content, the highest priority lexicon may be a dictionary/lexicon for legal and billing related terms (but not necessarily labels as above - it may be necessary to differentiate the difference).

In a fuller system rules, such as part of speech may determine many ambiguities.

Where a word can only be understood in one way for the sentences to be syntactically correct, that word may have highest priority.

Phrases may generally have higher priorities than single words, but that may be changed by users.

The context of the invoice itself may also add a high priority resolver. For example, if the invoice is about a translation involving hardware then disambiguations of "electronics" context may be appropriate.

Priorities for over-rides and phrases may be calculated according to the rules.

For XML documents scopes may generally be expressed in XPath/XPointer language.

To make this a practical solution to uncertainties in natural language and because of practical constraints of adding annotation to each potential uncertainty, a clear and established set of defaults may be designed. In some cases, defaults may be expressed as a series of grammatical rules. For example, the default reference for each pronoun may be the preceding noun. A pronoun may only require a separate annotation when it differs from the default. One may supply a default lexicon with default meanings for each word. Cascading lexicons or RDF statements pointing to a separate meaning for any individual word, may override this meaning. Using such information a user agent may render the simplified or translated content correctly. Default grammar rules may also be referenced.

### Display the document with the disambiguations.

The disambiguation API may renders the document to which may make it possible for users to review the default disambiguations or best guesses. The user may then load it in the appropriate viewer. An example algorithm for making rules for identifying chunking scopes for resolvers may comprise:
Loading a set of rules for identifying chunk types in documents. A chunk may be a section, or a header, or a caption, a label, a footnote, etc. A chunk may be identified based on formatting, positioning, text structure etc. For example,. one may define a rule that guesses invoice labels, as they are relatively short written in bold and usually have ":" at the end. Chucks may have other chunks inside, for example,. billing address may comprise the label "billing address:" and the actual address data (entity).
Guessing or identifying the types of the chunks such as "header" and "label". The context of the chunks such as "invoice data" and "notes" may be guessed or identified. Rules may be run to further identify context. For example, in an invoice, the section following label "Note:" is a free-flowing text that may be mapped to a different set of resolvers than the main invoice data section.

An algorithm RDF-description may be created for each chunk type in each context that may define what resolvers to use and their order (set by priorities). For example in context of invoice data and scope of label, invoicing concept mapping resolver(s) may have the highest priority. In the chunk that follows, entity resolver may be most applicable, etc

Entities or data that may be useful for other process, such as values, numbers, figures, user details, references and records may be identified. Another algorithm may analyze labels mapped to concepts by a previous resolver and based on these disambiguations and the knowledge about various template structures may detect and appropriately mark the entities (e.g. the billing address data or purchase description).

Entities may be associated with disambiguation algorithms. The associations may further indicate when they should be excluded from translation (for example, one wouldn't translate a street name or a person's name even if it looks like a meaningful word). Entities may be associated with external data (from other documents or a database), for example, when invoicing from a company name we may find other external data related to the company. Entities may be used by other knowledge use applications

The disambiguation algorithms may be applied to the chunks.

Depending on how the section that is identified (as invoice note and some of the identified entities - such as product description), resolvers may be applied. For example, for free flowing text, resolvers for the context of an invoice may have the highest priority. Grammatical resolvers may be at the next level, legal context resolvers may follow (having a lower priority), and so on.

Resolvers may have rules to calculate a certainty (example rule: if in the given context and sentence a word can have only one meaning, this meaning is our guess of the highest certainty level).

Other rules may try to identify ambiguities, active voicing, etc. and make disambiguation suggestions with a calculated certainty.

Series of resolvers rules may be run until until each phrase is resolved and each certainty is resolved.

The document may be preparred for editing and/or rendering, wrap each disambiguated word or phrase into a SPAN tag containing the found disambiguating definition, add other important markers (e.g. disambiguation type, pre-calculated scope, font that identifies less certain words etc.).

The certainty of each element may be identified.

The words and phrases, whose definition is uncertain, may be highlighted, clicking on them may initiate editing,etc. An exemplary system of highlighting comprises:
- Links in blue and not underlined may be used for the words and phrases that were disambiguated with a high certainty, and no disambiguations with equally or closely high certainty were found. The user may view the definition (by tabbing to the word or in a mouse-over tool-tip) and, if necessary, click on a link to change it.
- Links in blue, underlined may be used for the words and phrases that were disambiguated, but there are other disambiguation variants with equal or a lower certainty. The user may view the given definition (by tabbing to the word or in a mouse-over tool-tip) and, if necessary, click on a link to see the other variant and change the disambiguation by selecting one of the variants or providing a new one.
- Links in bright-red, underlined may be used for the words that may need disambiguation but the system could not find any. Click on the words to provide.
- Text in black is the text (typically belonging to the entities) that was excluded from disambiguation.
- Low certainty phrases may have a colored background
- The prepared document may be transformed into the editing document HTML.

### The user may edit the document's default disambiguations.

The user may select a document in the editor, may review the various disambiguations, and may change some of them. Where the best guess is not correct then a new resolver with higher priority may be added to create the correct best guess. Also, user may be able to change the guess about the context and type of a certain section of content (content chunk), and the applicable resolvers may be re-prioritized accordingly.

### The disambiguated document may be rendered/transformed.

The system may apply the final disambiguations to the original document and may create the output (another document with clarifications as footnotes for example).

### UI Functions

A web-based editing UI-framework in a preferred embodiment of the present invention may comprise the document rendered for editing and various panels below, beneath and sometimes (depending on the mode) on the left. The latter panels may provide all required functionality for user actions, as following:
- Switch between disambiguation modes (lexical disambiguations of the invoice context and invoice concept mappings).
- Identify / edit entities - labeled chunks, each related to a certain invoicing concept.
- Edit mappings of text to concept or dictionary definition (change/create/cancel disambiguation for a word or a phrase).
- Extend the current taxonomy or dictionaries.
- Obtain translatable rendering, extended taxonomies and dictionaries (as RDF/XML) and other output.

### Editing Content

The content with the current disambiguations rendered for editing may take the central, largest part of the screen. In its invoice data section, a user may click on the detected invoice labels and may change the given disambiguation.

The word "Details" from an invoice data section may be mapped to an invoicing concept labeled as "Invoice details". The mapping may be changed (e.g. to one of the suggested invoicing, legal or generic dictionary definitions, or to another concept). The words in black may be invoice entities, but the user may add disambiguations to them too (in the advanced editing mode).

A change may be propagated to the whole document:
The word "invoice" from the invoice note section may receive the default invoicing dictionary definition - it certainty is the highest, as we are in invoicing context. The disambiguation may be changed, as suggested (to another dictionary definition, or a concept), or the user may add another mapping (to the definition or an invoicing concept).

### Adding Terms and Term Management

By clicking on the "Add New Term" button, users may be brought to the term management screen that may provide functionality to define a new term, based on an existing one, define its properties, map it to a phrase and a translatable option such as a clear definition for an idiom.

### Entity Wizard

After user has verified and, if necessary, changed all the disambiguations in the invoice, the system may be able to detect entities, which may be initiated by switching to the entity wizard mode.

### Data Reuse Application

There is a huge amount of existing data and content in the world. Applications comprising a computer database that collects, integrates, and stores an organization's data are known in the art. However, there are problems sharing data between different verticals, applications, and/or subgroups of an entity (such as a business organization and/or government organization) that may be using different databases and/or applications.

As mentioned hereinabove, the present invention may add a layer of knowledge to content, which may allow the content to be adapted generally automatically and/or more easily to new scenarios. The present invention may use the added knowledge about data to enable usage of new formats, new add-on functionality, and/or use by intelligent applications. In an enablement of the present invention, roles may be assigned to content/elements(s), possibly using a user interface. The roles may be comprised in general or industry specific taxonomies or may be newly defined. The roles may be used to change and/or update knowledge about content. For example, mappings may be created between content with similar and/or related roles, between roles, etc.

In a non-limiting example from business data reuse, the present invention may enable working with an ETL (extract, transform, and load) system even when the data is in a form that is not what is expected by the ETL system. This may enable use of the data without the creation of a new ETL system. The present invention may enable the extraction of data from free flowing data such as comments that may comprise important or relevant data. Rather than reformatting data to fit into a new/different system, using the current invention it may be possible to decorate and/or annotate knowledge on top of existing content. Knowledge may be reused to create more knowledge about data and that newly created knowledge may then be reused to extract even more knowledge from the content.

Referring back to Fig. 2 an example of data reuse in a business application is described, operative in accordance with a preferred embodiment of the present invention. Content 31 may comprise three different documents: document 1, document 2, and document 3. Document 1 may comprise mainframe data, which is referenced and explained by a document 2. Document 2 may comprise labels, references, descriptions and keys of each field in document 1, and expected format information for the field. Document 3 may comprise an error guide, which may reference the field keys in document 2 and may provide legal values. Document 1 may comprise structured data, but document 2 and document 3 may comprise semi-structured MS Word © tables.

Knowledge methods 34 may be used on document 2 to glean information based on the words and structure of the document and to generate knowledge statements that may be placed in knowledge interface engine 32 For example, labels of fields from document 2 may create a taxonomy of data field labels in knowledge store 6. The relationship between the table columns may be known and stored in knowledge store 6. This relationship may be used to derive and associate keys with labels of fields and with other information and this information may be stored in knowledge store 6. Clarification of terms used in the document may also be stored in knowledge store 6.

A knowledge use system 35 may be run on document 2 and may create programmatic rules or triples that correspond to each field of data. These triples may be considered additional knowledge, may be added to knowledge store 6, and may be used as background knowledge about this type of data base. A knowledge use system 35 may comprise an application that creates a human readable form and/or a web form that may allow a user to fill in information compatible with the mainframe data.

The labels of the fields may be mapped to a concept taxonomy, which may be further mapped, for example, to standard business intelligence fields. A knowledge use system 35 may then be used in the generally automatic creation of transformation code or style sheets to convert and load the mainframe data to an OLAP table. In other words, a knowledge use system 35 may use this knowledge for the generally automatic creation of an ETL system. This may be partially useful as some ETL systems may break when there are changes in the structure of the source database. Using a preferred embodiment of the present invention, changes to the structure of the source database will not matter as a new ETL system may be generated from the descriptions of the new source database.

The new knowledge that was created from document 2 by knowledge methods 34 and stored in knowledge store 6 may be used. For example, the taxonomy of field labels with associated keys, rules and references which may be stored in the knowledge store 6. may be used to build further associations and may aid in the interpretation and clarification of shorthand and omissions in the error guide (document 3) For example, the field keys may now be labeled and understood as their meaning may be in knowledge store 6. Once this process is complete document 3 may be fully processable and knowledge use system 35 may be run on document 3 and may create pattern matches used in code to validate each rule described in document 3 on mainframe data such as document 1. These pattern matches and triples may also be considered additional knowledge and added to knowledge store 6. For example, document 3 (the error guide) may say that "ref 1060 must be a valid postcode". In the knowledge gathering stage, (using the knowledge statements or triples formed from document 2) we may find that the field label 1060 refers to the third data field. By understanding the structure of the document it may be understand that the unstructured text is a rule about the third field. The text may be further disambiguated by understanding the word "valid". The closest match for "Postal Code" may be a background information table of "State Code Postal Abbreviations". Further, word(s) such as "mustbe" may indicate that the rule is a validating rule where the match must be positive and exact. Hence, all the information needed to convert "ref 1060 must be a valid postcode" into a validating pattern match rule may be available. The above example may have shown the use of the invention in gleaning knowledge from unstructured data and converting it into structured logic or structured data, and creating code from text requirements.

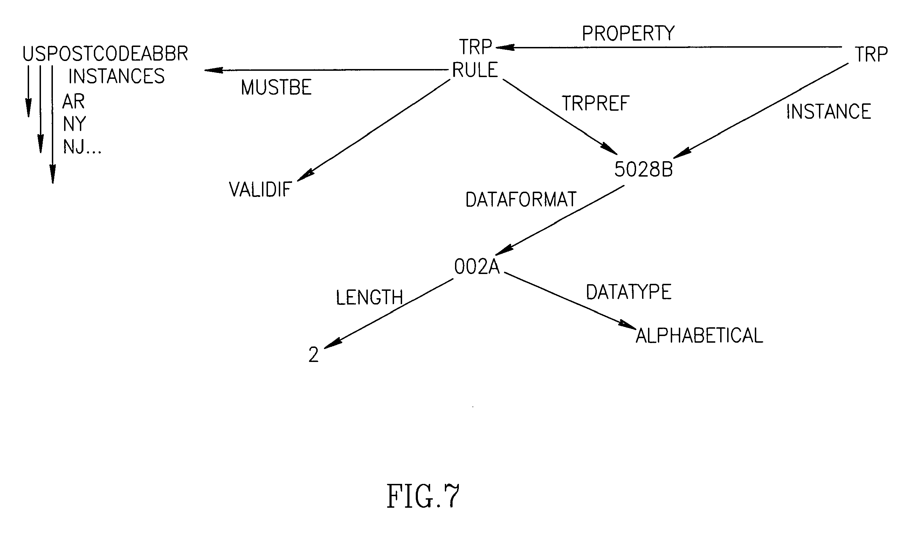

A knowledge store 6 of the above example may comprise graphs of triples that may define a type of database, define fields in the database, and rules. In a preferred embodiment of the present invention, such triples may look like:
- "5028B" is an instance of a field in this database
- RuleX is about 5028B
- 5RuleX mustbe (one of) USPostalCodeAbbreviations (reference to USPostalCodeAbbreviations table that is background knowledge)
- TRP5028B dataformat 002A
- OO2A datatype Alphabetical
- OO2A length 2Reference is now made to Fig. 7 a graphical illustration of an exemplary simplified RDF which may be queried representing the example above.

Sometimes there may be a contradiction between document 2 and document 3. This may provide an example showing how knowledge previously gleaned from content 31 and stored may affect the certainty level of knowledge gleaned in a second piece of content 31. When there is a contradiction, a human may be alerted to resolve the contradiction. Should multiple contradictions occur, and one document (or content section) consistently proves to be a more reliable source, then the certainty level of the reliable source may be increased whereas the certainty level of contrary information in the second document may be decreased. The level of certainty may be affected by multiple factors, and an operator may set a threshold whereby knowledge with certainty levels below a predefined threshold may require, for example, user confirmation. Hence, the above example may have shown the use of the invention to validate two pieces of text against each other and to locate discrepancies. Further, the invention may be used to clarify and improve the source content.

The new knowledge that may have been created from document 1 (which comprises mainframe data) by knowledge methods 34 and stored in knowledge store 6 may be used. By understanding the relationship between document 1, document 2, and document 3 the contents of document 1 may be made machine understandable, wherein the labels of the data and the relationships of the field(s) with the rules created in previous iterations may be inferred. A knowledge use system 35 may validate the mainframe data and may generate an error report. A knowledge use system 35 may transform the mainframe data into a format which may be easier for a human to read or into a form.

Hence the invention may enable applications to use all different forms of content to their full potential, and may allow the content to perform better, such as enabling enriched content, clearer content, better information and data gathering, creation of new codes, less errors for machine process such as ETL systems and translation, creation of new ETL systems, creation of new or adaptable interfaces for different user scenarios etc. Similarly, old reports and other unstructured data may be mined and converted into machine processable data and entered into excel spreadsheets of different forms.

### Localization and Cultural Adaptation

The same content may have different meanings in different locations or cultures. This may be due to cultural sensibilities, cultural values, and or different standards. This may require adaptation of content for different cultures and locations, for example, when entering a new market. For example, content may need to be searched to find cultural objects and components. The objects and components may be checked to see if the they are culturally appropriate and if they conform to local standards. An adapted rendering of the object may be created.

Items that may need localization include standards and requirements, for example, currency, time, and physical measurements. Cultural indexes and local values may also need adaptation. Some examples of cultural indexes are: power-distance (how much power is associated with being distant from other people), collectivism vs. individualism, femininity vs. masculinity, avoidance of uncertainty, and long- vs. short-term orientation. For example, a culture which focuses on individualism may focus on personal achievement. In an individualistic culture materialism and consumerism may be considered signs of success and may be considered "good". In some cultures controversial or argumentative speech may be considered a sign of "truth", hence good. In some cultures, youth and/or activity may be more valued than age and/or wisdom. A collective culture may focus on group achievements, may value supportive actions, and may consider extreme claims such as "we are the best" in bad taste.

The invention may use taxonomies for different indexes for culture and may create key terms for values, expectations, and human wants that are associated with them (culture taxonomy). For example, "youth", "active", and "personal achievement" may be mapped to appropriate culture types. In a further example, a logo is a concept that may be associated with a high power-distance index. It may thus be inferred that a culture with a high power distance rating values logos and the use of logos may appropriate for such cultures.

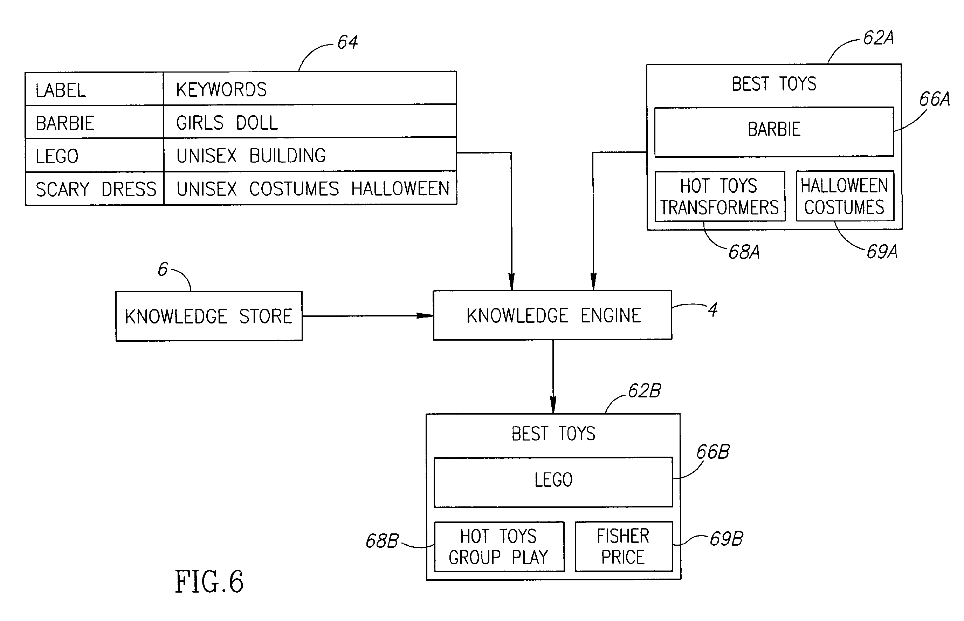

Reference is now made to Fig. 6, a block diagram illustration of an example of cultural and local adaptation, operative in accordance with a preferred embodiment of the present invention. For example, "Best Toys" may be an ecommerce toy site that may sell toys over the internet. The web site 62A may comprise several fields showing different types of toys that are available, field 66A may advertise a Barbie ™ doll, field 68A may feature "fad toys" or "hot toys", in this example, transformers, and field 69A may feature seasonal toys. A database 64 may comprise a database of information about the products "best toys" web site comprising, for example, a label column, a keywords column, and other exemplary columns not shown such as category, vendor, cost, price, recommended age, etc. Database 64 comprises keywords which knowledge engine 4 may map to cultural taxonomies and/or cultural indices and or/ terms that are mapped to cultural indices and or cultural taxonomies in knowledge store 6.

To enter a new marketplace web site 62A may need to be transformed so that it does not include advertisement for products which may be culturally offensive in the new marketplace. However, fad toys may not appeal to all cultures and may put people off from looking further into the site. In this example, fad toys may include characters such as "transformers". "TV characters" may be a key search term of their site that is associated with the fad toy product and its picture. The key term "TV characters" may however rank low in the culture currently being targeted as the culture may value permanence over change, additionally this TV show may not be popular. "Girlie" toys such as Barbie dolls may also not be favored in some cultures. Finally, Halloween is a western holiday not celebrated in all cultures.

In real time when the web site is accessed from a country were most people do not value these toys, the TV character fad toy may be replaced by an appropriate product from the database, for example, field 68B a group play game, the Barbie may be replaced by field 66B a Lego™ kit, and the Halloween costumes by field 69B a Fisher Price toy. Furthermore, the prices may be generally automatically converted to the appropriate currency.

In a further example, a talking character animation may be created using different gestures matched with words. During translation and localization the present invention may convert the gestures to the culturally appropriate gestures.

Another exemplary application may be training for business people looking to enter a new market. For example, warning or training questions may be generated about a piece of content or a business scenario.

Referring back to Fig. 2 , an exemplary site may be adapted for different cultures as a knowledge use 35. To enable this use, the following steps may be necessary:
step one = **parse/Build knowledge about content.** Using knowledge methods 34 knowledge may be saved in knowledge store 36,, for example: "This site is **designed** for US market, corporate subculture." or " This color is **colorcode** purple"(Automatic).
step 2 = check appropriateness/**Map knowledge to user scenarios and determine possible implications, for** example,. Purple implies feminine relevance in US, Purple implies bad luck in Italy, or Pink **implies** reform and women's rights in Iraq. Hence, in the US and Iran this page **implies** feminine values. This may involve knowledge use 35 receiving input from knowledge inference engine 32.
step **3** = action, **Do something useful with** knowledge use 35, for example, Warn for localization, Use female voicing, In a black and white version show with an appropriate local female banner (for example in Italian), or warn about cultural appropriateness.

### Adaptive Knowledge System (AKS)

The present invention, an AKS may provide a unifying methodology and framework for an improved level of analytical and interpretative capability across different content types and locations. The AKS of the present invention, may enhance the sharing of knowledge through interoperability, may enable creating and extending open and interoperable platforms. For example, the present invention may enable use of existing archives as well as the World Wide Web. The AKS of the present invention may further enable the dynamic reconfiguration of content across different domains, such as multimedia, interactive, n-dimensional and geospatial, learning objects and multi-lingual textual digital content. Applications using the current invention may further comprise support for parallel processing applications and for vastly different users needs.

The present invention is an implementation specification of an AKS that may allow the management, manipulation, and navigation of knowledge and/or concepts. The AKS of the present invention may comprise a set of core concepts that may be mapped to real and diverse key domains across types of content. This may enable connecting and integrating systems that use knowledge at different levels and domains. The AKS of the present invention may enable the rapid reuse of components and content to form new applications and business patterns, requiring true interoperability of content across multiple domains and platforms.

An embodiment of the present invention may provide a unifying framework through which different specifications in different domains may map the relationship of their specification to either an implementation specification or an abstract specification. This mapping may enable interoperability with any other ontology or knowledge model for any domain of content. A new model may be mapped that to of an abstract specification and the relationships between that and any other previously mapped specification may then be inferred generally automatically. Likewise the new model may be mapped to any existing model that has been mapped to any AKS abstract specification, implementation specification, and/or other specification that has been mapped to a mapped specification

By building an abstract model that may be verified by diverse domain specific specifications and by creating derived implementation specifications in possibly very diverse domains of content, the AKS of the present invention may determine the key categories and concepts that may enable the intelligent treatment of content possibly beyond what is possible when looking at any single domain alone. For the most part, these may be the key concepts that humans use to block and categorize data and anticipate behaviors.

For example, an abstract category of knowledge may be *identity.* In the implementation specification for multimedia components, the concept of *identity* may map to component integrity, and may include identifying what constitutes a component (which may be a non-trivial topic in platforms such as FLASH and JavaScript). In the implementation specification for textual contents the concept of identity may be used, for example, to differentiate between words and phrases.

By capturing, modeling and standardizing these abstract concepts, the AKS of the current invention may create a unifying bridge framework of knowledge modeling in vastly different domains of content. The AKS specification may account for human innovation and the rapid evolution of types of content. The AKS specification may have the ability to develop and evolve as web content evolves. It may support human spontaneity and innovation in content forms and usages so that implementation specifications may evolve to support content and types of content beyond what were anticipated. The AKS specification may further provide support for combining domain-modeling methodologies of knowledge capture in a single model. Different methodologies may have different advantages for the user. The AKS of the present invention may support combining methodologies to promote flexibility, robustness, speed of knowledge acquisition, usability, and reliability. For example, the specification may support combining automation of knowledge capture and human input to maximize automation without compromising on accuracy.

The present invention may further be used for inter-domain categorization that may enable identifying the gaps in knowledge and relationship models in each domain of an AKS sample content and may hence create more robust, domain specific models. This may be achieved by mapping the issues identified in a second domain and identifying possible correlations in their forms of content For example, the domain of geospatial information and n-dimensional media objects, lacks robust models that combine time dependency (such as the SMIL model), user interaction or events (such as Xforms) and sub domain knowledge such as video ontology - color clustering, homogeneity etc. When a taxonomy for geospatial information is added as a new AKS domain that may comprise creating mapped terms for concepts that are usually underrepresented in that domain of content. This may result in richer domain specific taxonomies as well as richer AKS core taxonomies. For example, the AKS term event, may have typically referenced user interactions. Now with the addition of the geological domain, the term event may include erosion (gradual ongoing events and volcanoes, (rapid violent events) hence expanding the concept of an event.

The present invention may further overcome barriers of ability in the domain of textual content. When performing any type of translation, adaptation, or knowledge processing of text the ambiguity of text is always a problem. Translation tools often make amusing errors when a misinterpreted word is given a different meaning. However, for many cognitive disabilities, such errors are not amusing, but are confusing or misleading. Furthermore, colloquialisms and non-literal use of language creates a separate problem for many users. For example, semantic pragmatic disorder (SP) is a communications disorder that impairs the processing of information that is non-literal and has no visual reference. People with SP are likely to take colloquialisms, metaphors or sarcasm at their literal meaning. Hence, they are often unable to understand or are confused by content, because of the semantic choices of the author. An embodiment of the present invention may enable the identification of the purpose of elements and may enable intelligent interfaces to overcome these barriers. For example in the case of non-literal text (such as sarcasm) it may be rendered in italics, to warn the user, and may have a literal equivalent available via a mouse-over.

The AKS methodologies of the present invention that may enable combining methodologies as defaults and overrides, may enable concept coding and disambiguation of text to be generally practical for many authors since concept coding annotation of each word in a document may not be required. When the knowledge comprising the intent of sections of content is known less relevant content may be removed or hidden, which may enable only the main point of the content to be seen. The present invention may contribute in the textual content domain by enabling intelligent interfaces across barriers of all disabilities. In some sense, accessibility may be considered a benchmark scenario for interoperability since when content is truly accessible, then other cases of interoperability, such as enabling search and content manipulation may typically have been solved. For example, content that can be converted into Braille and symbolic languages such as Bliss or Sign, probably may be easily converted into other European languages. Implicit knowledge made explicit, may allow for localization and may overcome barriers that result from author assumptions. Content that can be summarized and re-rendered for people with cognitive disabilities may be easily processed by other knowledge-based applications.

A method using an AKS, operative in accordance with a preferred embodiment of the present may comprise:
- constructing an original specification to capture and standardize the core concepts in human knowledge that enable content in different domains to be manipulated, adapted, shared, and used.
- enhancing the standard model of knowledge to incorporate practical concerns such as the speed and automation by which knowledge can be captured, as well as enabling combined methodologies to provide a more robust approach. An example embodiment that may use the RDF specification by the W3C with OWL for creating triples will be used as this may also permit the future evolution of content to be incorporated into the models, so that knowledge about content may evolve with the usages and change of content and communication itself.
- mapping the standard may create practical implementation knowledge taxonomies in target sample domains for example geospatial, n-dimensional and interactive multi-media objects. The abstract model may connect and integrate systems that use knowledge at different levels and domains. The abstract model may extend and adapt as more domains are added.
- a knowledge use service may be, for example, an extendable middleware application for conversion from the adaptive knowledge (AK) model to other knowledge models in the domains of user requirements.
- Applications may be built, tested and analyzed that act as useful services and extendable test cases for the AK standard and methodologies.

The system may comprises: an AK bi-directional mapping relating a first knowledge model (e.g. IMS user profiles), a bi-directional mapping relating a second knowledge model (e.g. LOM) to the AK implementation specification for user requirements (by for example, using the API tool kit for creating mappings), transitional rules that convert mapped knowledge to the AK standard, and a user interface

The implementation may be supported by an API -Application programmable interface and toolbox layer that may allow for different AK implementations to become exploitable by real applications. Functions and capabilities may comprise:
- An API of function calls that may enable the creation of AK statements
- An API of function calls that may enable querying an AK knowledge base
- Interoperability with harvesting tools such as web crawlers
- Flexibility to allow different AK domain ontologies for describing relationships and implicit associations typically found in e-Content
- A tool box that may allow mapping the description of different ontologies in a given domain to any AK standard(s)
- A tool box that may allow the loading and mapping of libraries of equivalents (extendable)

The API layer may be dependent on an RDF parser and query languages such as Jena by HP and may use a query language such as sp

The AKS of the present invention may be used in conjunction with various applications and may allow further knowledge creation from content. An AKS may be used, for example, for data reuse or localization. As mentioned hereinabove, AKS may enable the creation of taxonomies of abstract core concepts. Different fields may use different terms for common concepts. Mapping the terms from different fields to the abstract core concepts and mapping relationships between concepts may allow data reuse between different fields. For example, use of "hot keys" for accessibility applications may imply that terms with associated hot keys are important. This knowledge may then be used in other applications.

In localization applications cultural values may be encapsulated and keywords may be associated with cultural indices. If keywords appearing in content are inappropriate a different more appropriate keyword may be chosen.

### Disambiguation

Non-limiting examples of ambiguity that may occur in content may comprise:
- lexical ambiguity wherein there may be several possible meanings
- syntactic ambiguity or structural ambiguity
- semantic ambiguity
- pragmatic ambiguity
- ambiguous words
- vagueness and generality (indeterminacy).

Disambiguation of content may be important for many applications. An embodiment of the present invention may enable disambiguation of content.

Reference is briefly made back to Figs. 2 and 3 described hereinabove. To disambiguate content several processes may be necessary. In a preprocessing phase content may be parsed and an initial guess or meaning may be assigned to each phrase and/or word. This may be done as described in Fig. 3 and as shown by knowledge methods 34. The "best guess" may be accurate a majority of the time as an iterative process may have been used to maximize the certainty of the guess. The certainty level and guessing mechanisms of knowledge methods 34 may have been selected to reflect knowledge use 35 which may use content 31.

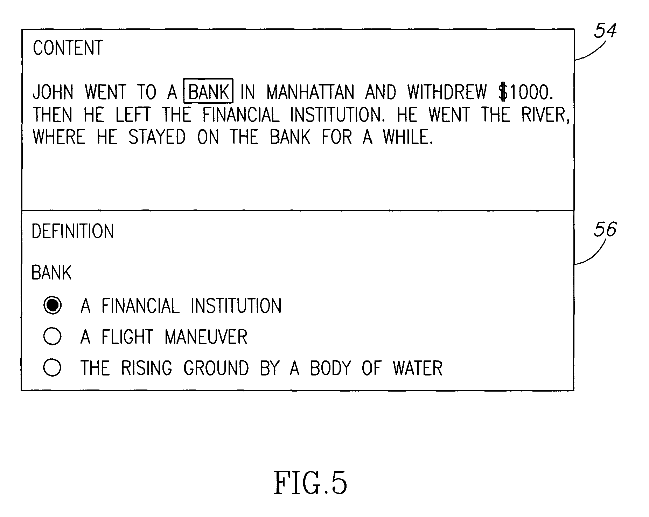

A correction process may comprise asking a user to correct incorrect guesses. Reference is now make to Fig. 5 a block diagram illustration of an authoring tool, an example of user interface tool 10 (Fig. 1), operative in accordance with a preferred embodiment of the present invention. The authoring tool may comprise at least one dialogue box. The authoring tool may enable a user to see the content, access the guesses, defaults, etc. and adjust and/or correct them as necessary. Human intervention may be necessary as the automated guess may not always be correct. Fig. 5 comprises a dialogue box 50 comprising a content section 54, and a definition section 56. Content section 54 may comprise the text of the section of content to be examined. Words or sections with guesses which may not be correct may be identified to the user, for example, they may be underlined, highlighted, etc. When the author mouses over a word or phrase, the guessed meaning may be shown, for example, as a pop-up, it may appear as the first choice in a list of possible meanings, or in some other appropriate manner. Definition section 56 may comprise a cascaded list of meanings for the word or phrase currently active. The current content shown is "John went to a bank in Manhattan and withdrew $1000. Then he left the financial institution. He went to the river, where he stayed on the bank for a while." The best guess and certainty of guesses in this example change due to the proximity of words such as river which change the statically likelihood of the default, most used, definitions. If none of the choices of definition are correct the author may enter a new definition. An optional menu bar or function buttons (not shown) may allow other appropriate functionality. In the current example, the word bank may have several meanings as shown in the definition section 56 where the following possible definitions of bank are included: a financial institution, a flight maneuver, or the rising ground by a body of water. However, in the case of the highlighted occurrence of bank the present invention may have chosen the correct meaning from the knowledge derived from the context, for example, the appearance of a "$" in the sentence.

When the author has finished the correction phase, the disambiguated content may be input to a knowledge use 5 of Fig. 2. There are many types of knowledge use which may be possible. For example, there are several translation knowledge use options; knowledge use 5 may be a machine translation program, it may be a human assisted human translation program, where the clarification information such as glossaries and translations are integrated into different translation tools, it may be a human directly translating the content using the added knowledge available. Other uses may comprise localization, data reuse, etc. the context of the knowledge use may affect which levels of certainty and rules that modify certainty. For example, missing articles in a sentence and is more important for machine translation into other languages then it is for human translation. It is also not important for translation into Russian (which does not have articles)

The preprocessing phase may involve predicting ambiguity. To do this it may be necessary to find causes of ambiguity. This may require, for example, rules for identifying ambiguities. Certainty levels may be modified by rules that identify "bad" things,for example grammatical patterns that increase ambiguity, or statistical evaluation of the likelihood of a meaning of a word given its context and proximity to other words and patterns or situations which cause the ambiguity situations listed above. Sometimes, an option may be available to use as a start point rules used in a previous document may be used. For example, use defaults, rules or resolvers overrides or context from a document created by the same author or by a different author in the same field. A cascading priority of rules may be built up that may be used in identification and guessing of knowledge in content. In a further preferred embodiment of the present invention a lexical resolver that works with parts of speech, for example, may be used. Use of a may enable the guess to be based on the correctness of the part of speech. Glossaries and/or dictionaries may be loaded into the knowledge store. Programs exist in the art that identify sections of text that use terms consistently and that may be identified with a single glossary and/or dictionary. To integrate with these translation environments may be a knowledge use. To achieve this a knowledge use application may need to identify and separate sections of text that use words consistently, so that when a term is used for a second meaning a new section is started, b, to build the glossary or dictionaries for each section c, associate each section of text with relevant glossaries or dictionary

The creation of dictionaries will involve creating language pair dictionaries that match the word and meaning identified in the disambiguation step to o the correct word in another language. This may use a pivot taxonomy or be a direct mapping.

These glossaries and/or dictionaries may be prioritized as described hereinabove. It may further be necessary to determine when a new glossary/dictionary is necessary.

In a further preferred embodiment of the present invention a wordnet may be created that links terms and synsets to concept nodes. (Wordnets are available in the art.) This may be done by parsing various dictionaries and the linguistic information associated with each term, to identify a common concept node. This may include analyzing the relationship of a term to other terms such as analyzing common synonyms, and semantic relations such as Hyponyms, Hypernyms and Meronyms and Holonyms. For example the existence of a groups of synonyms sharing a common translation into a second language, may suggest that a concept node and the correct translation of that concept. The invention may also use certainty levels of different similar algorithms to identify were an automatically generated wordnet requires human confirmation. Having bilingual dictionaries in several languages map to concept definitions may allow the creation of a rich muli-lingual wordnet that will enable the automatic creation of language pair dictionaries This can be used by the knowledge use application in preparing a document for translation, by associating such a dictionary with a section of text were by words have been consistently used.

Terms may also be added by a user, In this case terms may be flagged to be handled differently such as using a approved and human conformed translation for items such as trademarks and taglines. Other flags may include idioms and the like.

### Security

Security, fraud prevention, and the related issue of identity are very important for example when using the Internet, during credit card transactions, in banking, etc. Generally, when providers create improved identification systems infrastructure may need to be changed and systems updated. Furthermore, some identification systems may need to be personalized, for example, someone using a Braille reader cannot perform a capture task such as identifying the words on a picture. Still further, how much a person needs to identify or reveal should be controlled for different situations. For example, to avoid child abuse, most people would be happy or prepared to provide more identity information. Conversely, users should have the option of not trusting or interacting with people who do not identify themselves sufficiently. The present invention may support flexibility in identification so that identification may come with consent as part of a negotiation. This present invention may involve a two-way authorization system that may separate knowledge about a person (or service) from identification of who that person is. Users or service providers on each side of an interaction may identify themselves as they deem appropriate. Each user or service provider may decide if the identification is sufficient to continue the interaction.

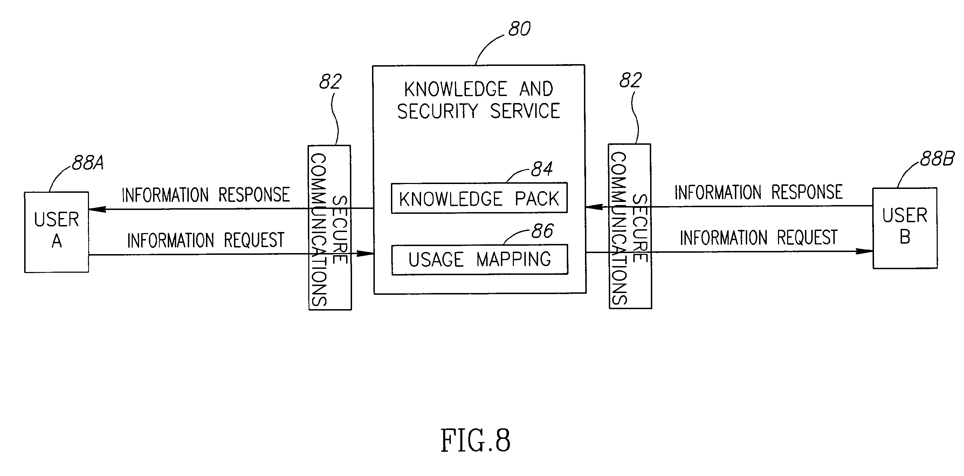

Reference is now made to Fig. 8, a block diagram illustration of a secure user identification system, operative in accordance with the present invention. In the description hereinbelow, a user may comprise a person or service. Knowledge and security service 80 may comprise a knowledge pack 84 and a usage mapping 86. A method of secure communications 82 may be provided allowing a user 88 to send information requests and receive information responses from knowledge and security service 80 in a secure manner.

User 88 may be a registered user of knowledge and security service 80 and may store knowledge about aspects of themselves in a knowledge pack 84 that may be kept by knowledge and security service 80. This knowledge may be confirmed as true with different levels of certainty, depending on the maximum level of clearance user 88 wishes to enable. Conformation does not have to be "high tech" and may comprise, for example, a simple a phone call. User 88 may then be provided with a secure mechanism for identifying themselves as themselves and may use secure communications 82. The knowledge stored in knowledge pack 84 may be stored as RDF triples, in a matrix, or in any other appropriate format. Further, user 88 may configure what may be exposed about themselves to different profiles of other persons or services. This may entail mapping the knowledge about user 88 to an exposure level applicable to a different person or service (herein usage mapping 86). Usage mapping 86 may be stored in knowledge and security service 80. A user 88 may create maps of what information may be exposed to what types of people (children, adults, co-workers, etc.), and at what given certainty level (for example, we may have high certainty that they are registered as a child).

Given two users 88A and 88B either user may request information from the other user's knowledge pack 84. On conformation of the requested extent of identity with the requested certainty level the two users may now continue to interact, communicate or may complete a transaction.

Non-limiting examples of information requests may include: is user 88 is a person, is user 88 a high school student, is user 88 named John Doe, and is user 88 a female. Non-limiting examples of information in knowledge pack 84 may comprise terms describing characteristics of the user, for example, identity, numbers, etc. Knowledge pack 84 may further comprise data about different modes and their relationship to different pieces of security related information.

Non-limiting examples of usage mappings 86 by a user that is a person may include: identify me as a child only to users known as "a child" with a high level of certainty and if known with complete certainty that requesting user is a member of the police then for crime investigation allow full traceability to "me". However this information should not be made available to other adults or people available as children with a low certainly level. Non-limiting examples of usage mappings 86 by a service that wishes to show trustworthiness may include: perform the tasks necessary to enable complete certainty, remind customers that they should always check via a verification service to identify that they are actually on the site (users of the verification service will not be required to identify as more than a customer), and always expose who "we" are by including, for example, our incorporation number in NY, our NASDAQ key term, etc.

Further, a user may in general want to block or enable information in a given scenario but may want to override that choice in real time. For example, a usage mapping 86 may block a given identification request. However, if the user wishes to continue the current interaction, the extra information may be provided "one time only" or "only to this person" without changing the general usage mapping profile.

The details of the security mechanism may change more often than the interface between the user and the system. Furthermore, the mechanism may be heavy or lightweight depending on the maximum amount of personal details a person may want to expose. For example, for email and similar usages it may only be necessary to determine identity insofar as the difference between a person and a robot. Thus, a simple task, such as identifying a song or the third letter in a word may suffice. Even within one usage case, multiple mechanisms for identification may be available to work with the different scenarios and limitations of real users. Examples of possible different scenarios with a use case are does the user like modem music or do they know the English alphabet.

Different security settings may optionally be provided. For example, a person may log in from different computers and may want to be able to identify himself or herself when they are logging on. This may require enabling data and terms for identifying the person. For someone working on a computer that is not registered as their own there may be different mechanisms for different levels of security and certainty.

As mentioned, the level of certainty that the information is correct may be set by a user as a security setting. Such a security setting may correlate to different types of interaction. For example, a person may only want a low level of certainty for receiving emails, but a high level of certainty for a transaction. As there may be multiple guaranteeing services and components this may include a "who is guaranteeing this person, and how sure are we of the second person or service guaranteeing the person".

In a further preferred embodiment of the present invention, an optional tracking mechanism to guard against the possibility of "relaying" may be necessary to conform that the email sent by a user is the same as was sent by the user system. A further preferred embodiment of the present invention, may gather knowledge and store information about a user and their habits. The knowledge gathering may be performed as web sites are accessed or other users request confirmation about a given user. This may be hugely important for crime tracking or marketing.

An exemplary embodiment of the present invention is a state-wide high school email system using a knowledge and security service. Each school may receive an identification package that 1) may be used to identify the school as a school and 2) may allow a teacher to register each child's account. The teachers themselves may be identified by their social security number, school credit card, and/or a confirmation from the state education department that this is a teacher and they are currently using the identification package. A phone call to each school may also be placed. After the initial identification of a school, automation may take over and the teacher may identify himself through passwords. Questions and information may be sent, optionally encrypted, to the knowledge and security service.

Each child in a high school in the state may be registered by the teacher with a high level of certainty as a person attending school. A usage mapping may be set that in general identifies a student as "a person". However, to other people identified as attending school a student may be identified as an "attending school" person. A way for each child to identify himself may also be stored. For example, the answers to a series of questions (such as the first three words of a favorite pop song), a password, etc.

Non-limiting exemplary uses comprise:
- A person who is blind maybe generally automatically be identified as a person and not a robot and gain access to services without being barred by inaccessible capture mechanisms.
- A person who is severely learning disabled and hence worried about and vulnerable to exploitation and crime may request that transactions and communications only be enabled with fully identified and traceable users.
- A guardian of a minor may request that transaction and communication by the minor be only enabled with fully identified and traceable people.
- People may make payments to each other using a credit card and deposit directly into each other's bank accounts when they are fully identified and traceable.
- Product fraud may be reduced.
- People may configure their web browsers to warn them when they are in a form with a non-identified source.
- Adult and gambling sites may be required to allow only users that are identified as over 18 years of age.
- Users can set their "expose me" setting depending on the profile of the other user. For web site, surfing you may expose that I am a person not a robot. For email identification, you may expose my personal details of phone number, age, full name, and address. For interactions and transactions, you may expose my full name more information only on my request
- In another embodiment of this type of application the users may not be people but applications or programmable objects. Access right for applications and objects to work together in an automated, or semi automated manner may be approved by this architecture or invention.

Use of this knowledge use application may separate the hard to secure space of user identification and the simple to secure, but fast changing space of service to service encrypted or secure data transfer. This means we may have more or less effort in the user identification space, depending on the need and settings. This makes the system flexible and fast changing without recreating the architecture that is based on secure data transfer.

The space between user and service may be continually changing. This may be essential as user and service identification mechanisms are often compromised or leaks are discovered. Making this element easy to change and flexible may give a longer life to the invention, beyond the life period of any one identification mechanism. Further, the same architecture and system may be used whether a very high level of user identification is required (such as a retina scan) or only a low level (identification of a person as being a person).

### Knowledge Object Programming (KOP)

Another preferred embodiment of the present invention is to develop new knowledge centric programming paradigm that may be more powerful and flexible than the current programming methodologies. In Knowledge Oriented Programming (KOP) knowledge methods may be used to gather knowledge that describes or relates to a programming object and may be stored in a knowledge store. Function data that typically was used as member variables in OOP may now be derived from the knowledge as a knowledge use. Hence, object data may be derived from object knowledge. Data, variables, and relationships between then may all be exposed. This may enable
- Programmable objects from different systems may be able to share data and collaborate
- Program layer logic may be interoperable
- Programmable objects from different systems may be able to work together.

In a preferred embodiment of the present invention, the knowledge store included an AKS framework for a higher level of analytical and interpretative capability across different content types, and to enhance the sharing of knowledge, concepts and logic through interoperability, and ultimately enable the dynamic reconfiguration of content across different domain of content classes, so that data can be derived from multiple knowledge stores. AKS for KOP may be an abstract ontology of base concepts that may be extended to map new terms as required. For this to be effective the base ontology may have to capture the core concept of categorization and programming logic from which domain specific ontologies may be created and mapped. AKS for KOP may map according to existing taxonomies and models in domains such as multimedia, language, programming logic and user requirements in non-limiting examples. Further tools may be created to enable programmers to locate KOP concepts and correctly extend them.

Examples of domains for KOP may comprise:
- Interfaces and widgets, possibly including scripted and dynamic widgets, with multimedia components, that may capture the changes and interplay between state, actions, events, interactions and time
- Businesses data objects, such as databases and business data standards.
- Users, access rights and security
- programming logic using different programming paradigms and methodologies
- and multi lingual objects, to enable accurate modelling of the knowledge and meaning within textual content

To demonstrate the present invention the simplified example of a programmable object storing information about a date for an Israeli application that uses Lunar months will be used. For the sake of the example the following assumptions may be made: A) that the date member variables may have been mapped to terms representing what they mean, B) that the access function may have been mapped to a programming concepts ontology so that its role may be known and its relationship to the date member variables may be exposed, and C) associated information about the data object such as time zone, and data format may likewise have been mapped to concept nodes.

Now a KOP con formant service or application may be able to automatically work with the data by using an independent data conversion interface. These independent programs (including the data object and the service) may be able to work together automatically even if they were independently created by programmers who did not know about each other's structure or package names. This may now be possible because of the common conformance to the KOP knowledge based framework.

The benefits may now become clear. Independently created programmable objects may work and interface together without knowledge of structure or implementation of other objects. Programmable objects may become portable and vastly more interoperable. Small companies may create applications that may reuse and may be compatible with other applications. This may be possible without forming strategic alliances or creating multiple versions of the an application to enable integration with popular tools. Rapid new application design may become possible as programmers may interface with other component applications without learning their interfaces. Programmers may be expected to understand and capture knowledge about their own classes or programmes but not about the work of others.

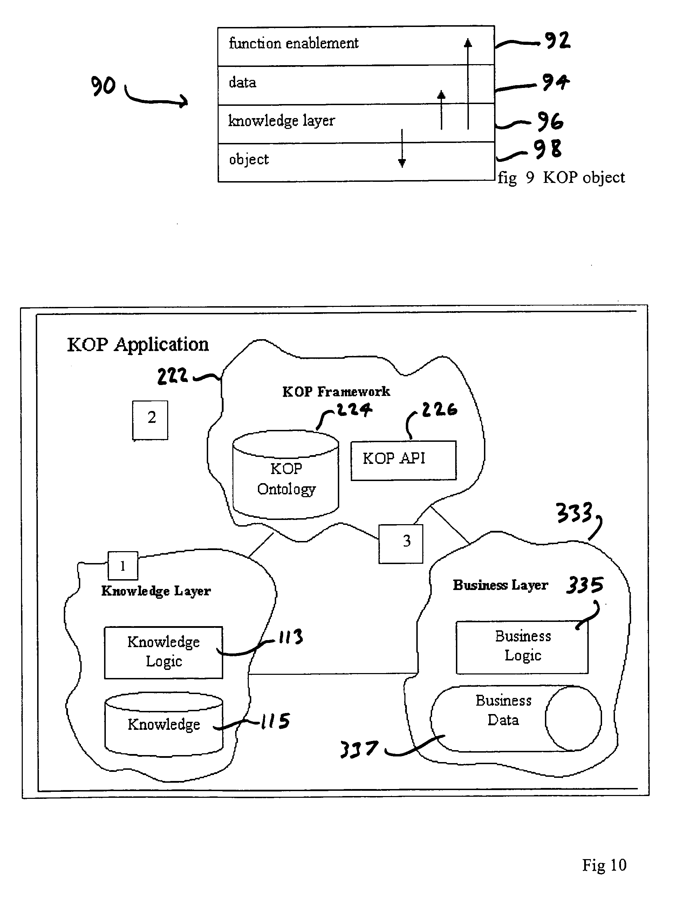

Reference is now made to Fig. 9 a block diagram illustration of a KOP object, operative in accordance with a preferred embodiment of the present invention. A KOP objects (herein programmable object) 90 may comprise four layers, function enablement layer 92, data layer 94, knowledge layer 96, and object layer 98. Programmable object 90 may have an additional layer, knowledge layer 96, which may acting as a knowledge store. A member function may use member data. However, in place of the data always being stored in data layer 94, the data may be stored as a set of knowledge queries that may act on the knowledge layer database. Knowledge about the functions, labels and logic may enable new objects to understand which functions may be useful to them. The incorporated knowledge may also be used to affect the other functions of the programmable object. For example, the knowledge may trigger and change a user interface or programmable interface.

The additional steps of KOP may comprise:
1. Adding knowledge that may be descriptive of the object characteristics, meaning, logic, usages, or role, and information that relates to the functional subsets of what an object is. Core concepts of knowledge relate to what an object does, associations of an object, the who and identity of an object, and the why of an object (or part of an object)

For example, a database field for an event date may be mapped to a concept of a date from the standard ontology, while the whole table may be mapped to a concept of event (for example, from a customer's extended ontology). A class that should obtain, convert to the current time zone and use the date may make a query for the according concept (a date under of an event). The knowledge layer may find the field in the relevant data source and may convert it, before passing it back to the business logic layer. Using this approach, the business logic may be completely separated from the structure of the actual business data and its pre-processing logic. The business logic may just get the date in the correct format and concentrates strictly on the related business process. Matching between data in a data source and a data field in an OOP Class instance may be performed by the KOP framework. It may be based on ontology analysis and the software knowledge base (object and data descriptors).

The knowledge layers from different objects may enable and allow the inference engine to infer conclusions as a result of both knowledge bases. This may result in new action, rules or end functions. For example, access functions for an object may include the combination of knowledge statements about the base object and the accessing object.

Some possible features may comprise:
- Old objects may be ready for new applications.
- Objects may infer knowledge and may also harvest knowledge associated with other objects.
- New knowledge and reliability of knowledge may always be inferred from old knowledge.
- Knowledge modelling may support the knowledge layer.
- Knowledge may be evolveable and may be gathered over time.
- Questions like reliability of knowledge may be built into the knowledge layer.
- KOP may enables innovation

An example embodiment may contain a specification for enabling standards. For example
- Execution semantics,
- *Constructs*
- Syntax
- Type system

An exemplary embodiment may support a compiler or language converter and supporting code libraries. Optionally, a KOP software framework may be implemented as a module of an existing language such as Java; the compiler may act as a language translator, or source to source translator that may translate the new terms and constructs. KOP implementation may be in multiple host platforms (such as Java, C++ , PHP ,etc.). Code libraries may further include the application, document and GUI elements, as well as elements noted to be specifically important to users. This may comprise: data base classes, relational databases, common queries, secure components, user profile classes, access rights, middleware components similar to beans, and XML support. Beyond that core application frameworks may be designed such as:
- Secure architectures, user security and trusted domains.
- Enhanced data processing for business decision making

Supporting tools may comprise:
- an API, authoring tool or plug in that may allow the creation of KOP compliant code
- an API of function calls that may allow for querying KOP compliant objects
- a Tool box that may allow the mapping the description of different ontologies in a given domain to any KOP standards
- a Tool box that may allow the loading and mapping of libraries of equivalents (extendable)

Reference is now made to Fig. 10, an exemplary core software framework for KOP, operative in accordance with a preferred embodiment of the present invention. The core software framework may comprise a reusable design for KOP systems such as object architecture. This may also provide a context for the components in the library to be reused. This task may also identify the points of flexibility or hotspots where abstract classes or methods that must be implemented to be executable code.

In the above example and potential framework, knowledge layer 111 of an application may comprise knowledge 115 (about business objects and data) and knowledge-related logic 113. Knowledge may typically be expressed in terms from the standard ontology or in terms inherited from the standard ones. KOP Framework 222 may comprise a standard KOP ontology 224 and a set of standard tools and APIs 226 that may work with ontologies. It executes knowledge-related logic that may wrap around business logic. The execution flow may depend on knowledge that describes both business data 337 and classes implementing business logic 333. The result of KOP is that objects and aspects become self-describing.

Typically, the initial implementation may be slower because extra knowledge is being stored that describes aspects of characteristics that relate to data. Even knowledge that does not relate to any data currently in use may be saved.

Care may be taken that this framework is abstract and not restricted to a development environments. It hence is an abstract framework and does not contain implementations standards.

Revisiting the examples of applications for the invention so far it may now be seen how they may be adapted to be KOP applications.

For example, an embodiment of the invention for accessibility may become a KOP example. Accessibility concerns are interoperability and accessibility support in different systems, platforms and accessibility APIs. How well is the richness of interactive applications supported and captured? Are all the required terms and variables available to the application to write? KOP answers these issues at it may make information that may be implicit in a programmable object accessible to the operating system and assistive technology.

KOP may enable the identification of the intent of elements, and may enable intelligent interfaces to overcome these barriers. An example interface may be use of a keyboard in place of a mouse, and alternate accessible interfaces for new widgets that may be customized to the individual needs and access strategies of the user.

KOP may enable a new level in ubiquitous accessibility. In some sense, accessibility may be considered a benchmark scenario for interoperability. When content is truly accessible other cases of interoperability, such as enabling search and content manipulation, have typically been solved. For example, interfaces that can be mapped to different input devices, for people who can not use a mouse, can also be mapped to mobile devices. Implicit knowledge made explicit, may allow for localisation and may overcome barriers that result from author assumptions. Disambiguation information in the knowledge store may enable effective multi lingual applications. An example application framework for business data object that may expose the relationship between system and platforms that might otherwise not have a common bridge between them may allow different applications to share data objects and communicate as well as using a common content source to create content in different formats and protocols. KOP may be used to adapt and reuse one set of data objects and to some extent, expose operational logic. This may enable collaborative efforts between independently designed business data object and integration into a business intelligent application or ETL system,

The security application may also be implemented in a KOP implementation for applications such as object access rights.

Revisiting Figure 9, an object / service or user (88A) may become registered and store knowledge about aspects of themselves (84). This knowledge may be confirmed as true with different levels of certainty, depending on the maximum level of clearance they wish to enable. The person or service may then be provided with a secure mechanism for identifying themselves as themselves i.e. as 88A. The stored knowledge, 84, may be stored inside the KOP object of 88A or in the verification service or object 80.

Further, knowledge may be configured to include what may be exposed about users to different profiles of persons or services. This may entails mapping the knowledge about 88A (one person or service) to an exposure level to a different person or service (88B). A user may create maps of what information may be exposed to what types of people (children for example), and at a given certainty level (for example, we are high certainty that they are registered as a secure service).

Thus, either user or object (88A or 88B) may request information about aspects of a person or service at the other end i.e. 84A or 84B from a trusted verification object or service

### Secure communication mechanisms inside the verification service object

secure communication mechanisms may comprise:
- The mechanism may change more often than the interface between the user and the system.
- The mechanism may be heavy or lightweight depending on the maximum amount details an object may want to expose. Clearly not all users will want to expose all this information to everyone.

Therefore, users may create mappings of what to expose to whom. These are called usage mappings (UM). For example, a site wanting to show that they are trustworthy may
- always expose who "we" are, our incorporation number in NY, our NASDAQ key term, etc.
- perform the tasks necessary to enable complete certainty
- inform all their customers that they should always check via a verification service to identify that they are actually on the site, users of the verification service will not be required to identify as more than a customer

Other security settings may include the level of certainty that the information is correct. Such a security setting may correlate to different types of interaction. For example, a system may only want a low level of certainty for receiving emails, but a high level of certainty for a transaction. As there may be multiple guaranteeing services and components this may include a "who is guaranteeing this person, and how sure are we of the second person or service guaranteeing the person".

Numerous specific details have been described in the preceding description to provide a thorough understanding of the invention. However, it will be understood by those of ordinary skill in the art that the present invention may not require all these specific details. In other instances, well-known methods, and/or components may not have been described in full detail so as not to obscure the present invention.

An embodiment of the present invention may include an apparatus for performing the operations described herein. Such an apparatus may be specially constructed or may comprise a general-purpose computer that is operated according to a computer program stored therein. Such a computer program may be stored in any appropriate computer readable storage medium.

It is appreciated that software components of the present invention may, if desired, be implemented in ROM (read only memory) form. The software components may generally be implemented in hardware, if desired, using conventional techniques.

It is appreciated that various features of the invention, which are, for clarity, described in the contexts of separate embodiments, may also be provided in combination in a single embodiment. Conversely, various features of the invention, which are, for brevity, described in the context of a single embodiment, may also be provided separately or in any suitable sub combination.

While certain features of the invention have been illustrated and described herein, many modifications, substitutions, changes, and equivalents will now occur to those of ordinary skill in the art. It should therefore be understood that the present invention is not limited by what has been particularly shown and described hereinabove. Rather the scope of the invention is defined only by the claims that follow:

## Claims

1. A data reuse system comprising:
a knowledge capture unit; and
a knowledge processing unit,
wherein said knowledge capture unit comprises a knowledge encoding unit and a knowledge storing unit and
said knowledge processing unit comprises said knowledge storing unit and a knowledge processing unit.

2. A method for disambiguation of content and localization of culturally sensitive content comprising:
parsing content of an object for cultural objects and components;
gathering knowledge about the object;
inferring knowledge about the object;
checking if the object is culturally appropriate;
checking if the object and section of an object conform to local standards; and
creating an adapted rendering of the object.
